# EUROPÄISCHE PATENTANMELDUNG

(11) **EP 2 899 416 A1**
(43) Veröffentlichungstag der Anmeldung: **29.07.2015**
(21) Anmeldenummer: 14152148.4
(22) Anmeldetag: 22.01.2014
(51) Int. Cl.: F16C 32/04, F16C 39/06, H02K 7/09

(54) **Elektrische Maschine mit einer Magnetanordnung**

(71) Anmelder: Siemens Aktiengesellschaft, 80333 München (DE)
(72) Erfinder: Lipot, Hans-Werner, 97616 Bad Neustadt (DE)

(57) **Zusammenfassung**

Bei einer für eine bestimmte Anwendung vorgesehenen elektrischen Maschine mit einer um eine Achse rotierbaren Welle (4, 4'), die mittels einer Lageranordnung drehbar gelagert ist, soll die Lagerstandzeit verlängert werden. Hierzu wird eine Magnetanordnung vorgesehen, mittels derer eine in einer vorbestimmten oder vorbestimmbaren axialen Richtung wirkende Kraft (F_{Q}) auf die Welle (4, 4') ausübbar ist. Durch diese Kraft (F_{Q}) wird die auf die Lageranordnung wirkende Kraft verringert, wodurch kleiner dimensionierte Lager verwendbar sind. Dadurch kann die Lagerstandzeit erhöht werden.

## Beschreibung

Die Erfindung betrifft eine elektrische Maschine mit einer um eine Achse rotierbaren Welle, die mittels einer Lageranordnung drehbar gelagert ist.

An eine elektrische Maschine (Elektromotor, Dynamoelektrische Maschine, Verdichter etc) mit einer um eine Achse rotierbaren Welle werden abhängig von den jeweiligen Einsatzbedingungen häufig hohe Anforderungen bezüglich der auf die Welle einwirkenden und von der Maschine aufzunehmenden radialen Belastungen (Querkräfte) gestellt, z.B. bei der Drehmomentübertragung mittels Riemen oder Ritzel.

Bei einem Elektromotor greift beispielsweise die Querkraft in der Regel am Wellenende des Motors an und wird über die Motorlagerung auf den Motorständer und das Motorgehäuse übertragen und von einem Flansch oder von Füßen abgestützt.

Je höher die auf die Welle einwirkenden Querkräfte sind, umso größere Lager bzw. umso höhere Tragzahlen der Lager müssen vorgesehen werden, um diese Querkräfte aufnehmen zu können. Insbesondere bei Wälzlagern wird die Lagerlebensdauer sowohl durch Werkstoffermüdung infolge der mechanischen Belastung als auch durch die Schmierverhältnisse (Fettgebrauchsdauer) beeinflusst. Im Allgemeinen haben Lager mit größeren Abmessungen und höherer Tragzahl bei gleicher Drehzahl und Temperatur schlechtere Schmierverhältnisse als kleinere Lager. Dies ist aus dem sogenannten Drehzahlkennwert ersichtlich, der sich aus dem Produkt der Drehzahl n und dem mittleren Durchmesser dm des Lagers ergibt. Ein kleinerer Drehzahlkennwert bedeutet bessere Schmierverhältnisse und damit verbunden eine längere Standzeit für dauergeschmierte Lager. Dies hat zur Folge, dass durch die Wahl kleinerer Lager die Lagerstandzeit verlängert wird. Im Allgemeinen sind jedoch die Lagerabmessungen durch die für die jeweilige Anwendung erforderliche radiale Belastbarkeit vorgegeben.

Aus der Offenlegungsschrift WO 2009/133125 A1 ist ein Verdichter bekannt, der einen mittels Magnetlagern gelagerten gemeinsamen Rotor für die Strömungsmaschine und den Antrieb aufweist. Neben den Magnetlagern sind Hilfslager vorgesehen, wobei am unteren Teil des vertikal ausgerichteten Rotors ein Gleitlager vorgesehen ist und am oberen Ende ein als Kugellager ausgebildetes Wälzlager, das sowohl radial als auch axial lagert. Nachteilig bei dem bekannten Verdichter ist, dass die Kombination aus Gleitlager und Magnetlagern aufwändig und teuer ist.

Aufgabe der vorliegenden Erfindung ist es, bei einer für eine bestimmte Anwendung vorgesehenen elektrischen Maschine in einfacher und kostengünstiger Weise die Lagerstandzeit zu verlängern.

Diese Aufgabe wird bei einer elektrischen Maschine mit einer um eine Achse rotierbaren Welle, die mittels einer Lageranordnung drehbar gelagert ist, gelöst durch eine Magnetanordnung, mittels derer eine in einer vorbestimmten oder vorbestimmbaren axialen Richtung wirkende Kraft auf die Welle ausübbar ist.

Die Erfindung ist vorteilhaft bei allen elektrischen Maschinen mit einer um eine Achse rotierenden Welle anwendbar, bei denen stets eine Querkraft aus einer bestimmten Richtung auf die Welle einwirkt. Durch die Magnetanordnung wird eine Magnetkraft erzeugt, die dieser Querkraft entgegenwirkt. Dadurch wird bei wenigstens einem Lager der elektrischen Maschine die auf das Lager wirkende Kraft reduziert, wodurch ein kleineres Lager eingesetzt werden kann, als dies bei einer vergleichbaren elektrischen Maschine ohne die Magnetanordnung der Fall wäre. Die daraus resultierenden Vorteile einer erfindungsgemäßen elektrischen Maschine sind eine höhere Lagerstandzeit bei gleichen Betriebsbedingungen, eine geringere Geräuschentwicklung sowie allgemein eine Kostenersparnis.

Im Vergleich zu einem Magnetlager, das Kräfte in allen radialen Richtungen in Bezug auf die Welle aufnehmen kann, ist die erfindungsgemäße Magnetanordnung, die nur eine Kraft in einer vorbestimmten Richtung auf die Welle ausüben kann, wesentlich einfacher aufgebaut und damit kostengünstiger herstellbar.

Vorzugsweise ist bei der erfindungsgemäßen elektrischen Maschine die Welle durch wenigstens zwei Wälzlager, insbesondere zwei Kugellager, gelagert. Diese sind in großer Vielfalt und kostengünstig am Markt verfügbar.

Vorzugsweise umfasst die Magnetanordnung bei der erfindungsgemäßen elektrischen Maschine einen Elektromagnet. Elektromagnete weisen bezüglich Baugröße und der erreichbaren magnetischen Feldstärke Vorteile gegenüber Permanentmagneten auf. Weiterhin ist damit die der Querkraft entgegen wirkende Magnetkraft mittels unterschiedlicher Bestromung des Elektromagneten einstellbar. Damit wird ein und dieselbe elektrische Maschine an unterschiedliche Querkräfte anpassbar und damit für eine Vielzahl unterschiedlicher Anwendungen einsetzbar. So kann die Anzahl unterschiedlicher Typen für elektrische Maschinen einer bestimmten Bauart reduziert werden, was ebenfalls zu einer Kostenersparnis führt.

Bei einer vorteilhaften Ausbildung der erfindungsgemäßen elektrischen Maschine umfasst der Elektromagnet einen Eisenkern und eine Spule, wobei der Eisenkern vorzugsweise im Wesentlichen ringförmig ausgebildet ist und einen Zahn aufweist, auf den die Spule gewickelt ist. Dadurch kann eine besonders hohe magnetische Kraft erreicht werden, deren Richtung in Bezug auf die Welle durch die Ausrichtung des Zahns festgelegt ist.

Weitere Vorteile bezüglich der magnetischen Eigenschaften ergeben sich, wenn der Eisenkern als Blechpaket ausgebildet ist.

Bei einer weiteren vorteilhaften Ausbildung der Erfindung weist die Magnetanordnung einen Permanentmagnet auf. Insbesondere umfasst die Magnetanordnung zusätzlich zu dem Elektromagnet einen ringförmig um die Wellenachse umlaufenden, auf der Welle fixierten Permanentmagnet. Dadurch kann die durch die Magnetanordnung auf die Welle ausübbare Kraft weiter gesteigert werden.

Bei einer bevorzugten Ausführungsform der Erfindung ist die Magnetanordnung wenigstens teilweise lösbar an einem Gehäuse der Elektrische Maschine fixierbar. Dadurch kann die elektrische Maschine wie bisher üblich aufgebaut sein und nur bei Bedarf erfindungsgemäß um eine Magnetanordnung erweitert werden. Auch im Reparaturfall bietet die lösbare Fixierung Vorteile.

Ein weiterer Vorteil einer erfindungsgemäßen elektrischen Maschine ergibt sich, wenn die Magnetanordnung wenigstens teilweise in radialer Richtung um die Wellenachse verstellbar ist. Damit lässt sich die Richtung variieren, in der die von der Magnetanordnung erzeugte Magnetkraft auf die Welle einwirkt. Auch diese Maßnahme trägt dazu bei, dass eine erfindungsgemäße elektrische Maschine an eine Vielzahl unterschiedlicher Anwendungen angepasst werden kann.

Die erfindungsgemäße elektrische Maschine ist Vorzugsweise als Elektromotor ausgebildet.

Weitere Einzelheiten und Vorteile der Erfindung werden nachfolgend anhand der Ausführungsbeispiele näher erläutert. Dabei zeigen:
- FIG 1: eine Prinzipskizze eines Elektromotors gemäß der Erfindung,
- FIG 2: eine Prinzipskizze eines im Zusammenhang mit der Erfindung verwendbaren Elektromagneten, und
- FIG 3: eine Prinzipskizze zur Veranschaulichung der Wirkungsweise der elektromagnetischen Kraftunterstützung.

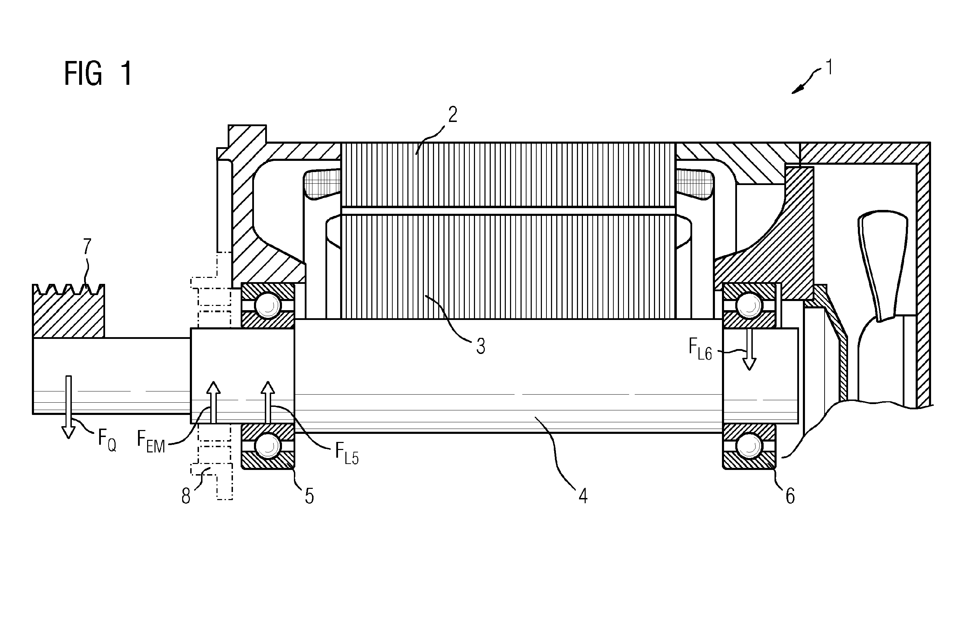

FIG 1 zeigt eine Prinzipskizze einer erfindungsgemäßen elektrischen Maschine in Form eines Elektromotors 1, der als wesentliche Komponenten einen Stator 2, einen Rotor 3, eine Welle 4 sowie Wälzlager 5 und 6 umfasst. Zur Kraftübertragung von dem Motor 1 auf eine angetriebene Einheit (nicht dargestellt) dient eine auf der Welle fixierte Riemenscheibe 7. Mit F_{Q} ist in der Zeichnung eine Querkraftbelastung der Welle 4 bezeichnet, die durch den Riemenzug hervorgerufen wird. Die Querkraft F_{Q} hat die Lagerreaktionskräfte F_{L5} und F_{L6} zur Folge, mit denen die Lager 5 und 6 infolge der Querkraft F_{Q} belastet werden.

Gemäß der Erfindung umfasst der Motor 1 optional (daher in der Figur strichliert gezeichnet) einen Elektromagnet 8, der zur Entlastung des Lagers 5 eine der Querkraft F_{Q} entgegen gerichtete elektromagnetische Kraft F_{EM} auf die Welle 4 ausübt. Dadurch kann insbesondere ein kleineres Wälzlager 5 eingesetzt werden, als dies ohne die Erfindung der Fall wäre. Bei gleichen Betriebsbedingungen kann somit eine höhere Lagerstandzeit für das Lager 5 erreicht werden. Als weiterer Vorteil eines kleineren Lagers ergibt sich daneben eine geringere Geräuschentwicklung des Motors.

Bei einer bevorzugten Ausführungsform der Erfindung ist die durch den Elektromagnet 8 erzeugte Querkraft F_{Q} einstellbar, insbesondere durch eine einstellbare Bestromung des Elektromagneten. Dadurch kann der erfindungsgemäße Motor in einfacher Weise an eine Vielzahl unterschiedlicher Anwendungen angepasst werden. Dies trägt dazu bei, die für unterschiedliche Anwendungen bereitzustellenden Motorvarianten zu reduzieren. So können allgemein Kosten gesenkt bzw. die Umwelt entlastet werden.

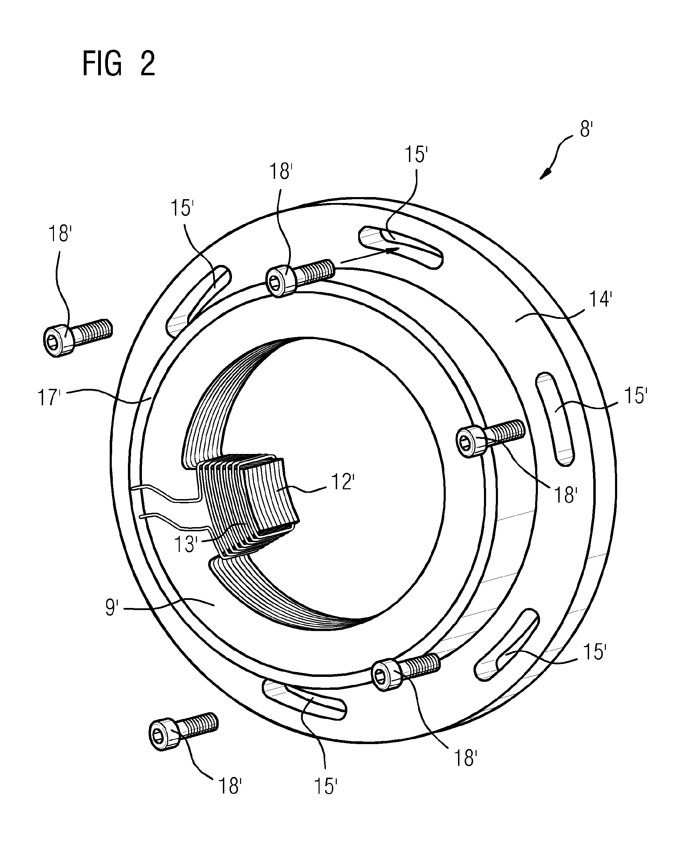

FIG 2 veranschaulicht die wesentlichen Komponenten eines beispielhaften Elektromagneten 8'. Aus der Figur ersichtlich sind insbesondere ein Eisenkern in Form eines Blechpaketes 9', das von einem Gehäuse 17' umschlossen ist. Weiterhin ist durch das Blechpaket 9' ein mit einer Spule 13' umwickelter Zahn 12' ausgebildet, der die Richtung der auf eine Motorwelle ausübbaren elektromagnetischen Kraft bestimmt. Ferner sind aus der Figur ein scheibenförmiges Befestigungselement 14' mit darin angebrachten Langlöchern 15' ersichtlich, mit denen der Elektromagnet 8' mittels Befestigungsschrauben 18' lösbar an einem Motor bzw. einem Motorflansch, befestigbar ist.

Mittels der gezeigten Ausbildung ist der Elektromagnet 8' in radialer Richtung bezüglich einer Motorwelle verstellbar an einem Motor fixierbar.

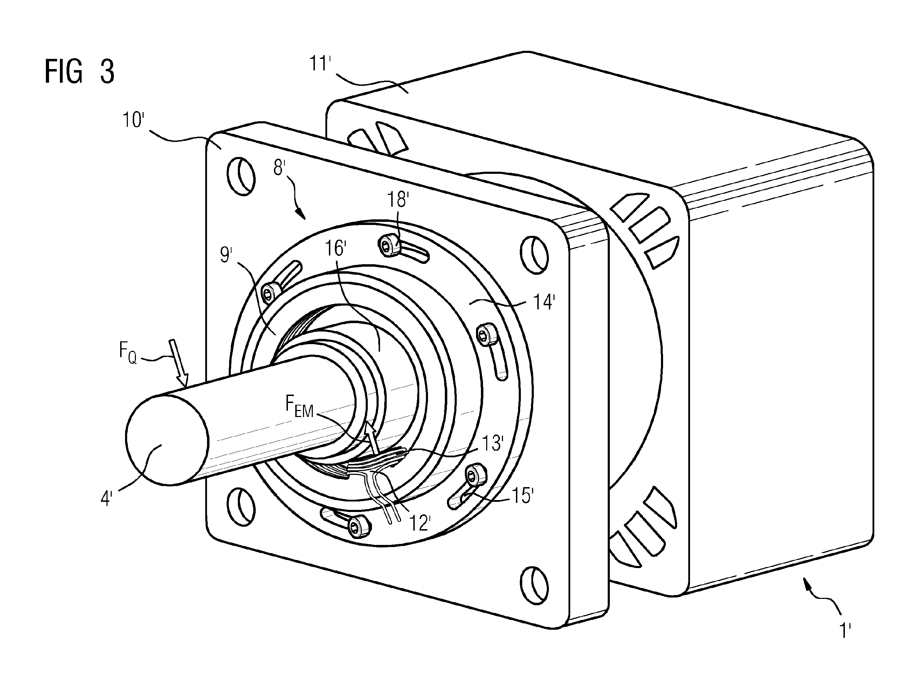

FIG 3 zeigt beispielhaft die erfindungsgemäße Befestigung des Elektromagneten 8' gemäß FIG 2 an einem Elektromotor 1'. Der Elektromagnet 8' umfasst dabei einen im wesentlichen ringförmig ausgebildeten Eisenkern in Form eines Blechpaketes 9', das über das Motorwellenende 4' geschoben wird und im Ausführungsbeispiel an einem Motorflansch 10' oder alternativ direkt am Motorgehäuse 11' befestigt wird.

Damit durch den Elektromagnet 8' eine Kraft in einer bestimmten Richtung auf die Welle 4' ausübbar ist, weist der Eisenkern des Elektromagnet 8' weiterhin den mit einer Spule 13' bewickelten Zahn 12' auf. Der bewickelte Zahn 12', der die elektromagnetische Kraftkomponente auf die Welle 4' ausübt, wird derart ausgerichtet, dass die elektromagnetische Kraft F_{EM} einer auf die Welle 4' einwirkenden äußeren Querkraft F_{Q} entgegen gerichtet ist.

Zur Ausrichtung des Zahns 12' umfasst der Elektromagnet 8' das scheibenförmige Befestigungselement 14' mit gleichmäßig über den Umfang des Befestigungselementes 14' verteilten Langlöchern 15'. Weiterhin umfasst der Motorflansch 10' mehrere mit gleicher Teilung angebrachte Befestigungsbohrungen für eine Schraubverbindung zwischen dem Elektromagneten 8' und dem Motorflansch 10'. Durch die Langlöcher 15' kann die Ausrichtung des Zahnes 12' durch den Kunden selbst vorgenommen werden, insbesondere in Abhängigkeit der Richtung eines Riemenzuges.

Zur Verstärkung der durch den Elektromagnet 8' auf die Welle 4' ausgeübten Kraft ist im Ausführungsbeispiel auf die Welle 4' ein ringförmiger Permanentmagnet 16' geschoben und fixiert. So übt der Elektromagnet 8' bei Bedarf durch eine entsprechende Bestromung der Spule 13' eine Gegenkraft zum Riemenzug aus und entlastet um diesen Betrag die Motorlagerung mit den bereits genannten Vorteilen.

## Patentansprüche

1. Elektrische Maschine mit einer um eine Achse rotierbaren Welle (4, 4'), die mittels einer Lageranordnung drehbar gelagert ist,
umfassend eine Magnetanordnung, mittels derer eine in einer vorbestimmten oder vorbestimmbaren axialen Richtung wirkende Kraft (F_{Q}) auf die Welle ausübbar ist.

2. Elektrische Maschine nach Anspruch 1, wobei die Lageranordnung wenigstens zwei Wälzlager (5, 6) umfasst.

3. Elektrische Maschine nach Anspruch 1 oder 2, wobei die Magnetanordnung einen Elektromagnet (8, 8') umfasst.

4. Elektrische Maschine nach Anspruch 3, wobei der Elektromagnet (8, 8') einen Eisenkern und eine Spule (13') umfasst und wobei der Eisenkern im Wesentlichen ringförmig ausgebildet ist und einen Zahn (12') aufweist, auf den die Spule (13') gewickelt ist.

5. Elektrische Maschine nach 4, wobei die Stromstärke eines durch die Spule (13') fließenden Stroms einstellbar ist.

6. Elektrische Maschine nach Anspruch 4, wobei der Eisenkern als Blechpaket (9') ausgebildet ist.

7. Elektrische Maschine nach einem der vorherigen Ansprüche, wobei die Magnetanordnung einen ringförmig um die Wellenachse umlaufenden, auf der Welle (4, 4') fixierten Permanentmagnet (16') umfasst.

8. Elektrische Maschine nach einem der vorherigen Ansprüche, wobei die Magnetanordnung wenigstens teilweise lösbar an einem Gehäuse (17') der Elektrische Maschine fixierbar ist.

9. Elektrische Maschine nach einem der vorherigen Ansprüche, wobei die Magnetanordnung wenigstens teilweise in radialer Richtung um die Wellenachse verstellbar ist.

10. Elektrische Maschine nach einem der vorherigen Ansprüche, ausgebildet als Elektromotor (1, 1`).
